Europäisches Patentamt

European Patent Office

Office européen des brevets

(11) Publication number: **0 451 795 A2**

# EUROPEAN PATENT APPLICATION

(21) Application number: 91105620.8

(51) Int. Cl.⁵: **G05B 19/405**, G05B 19/41

(22) Date of filing: 09.04.91

(30) Priority: 09.04.90 JP 93544/90

(43) Date of publication of application:
16.10.91 Bulletin 91/42

(84) Designated Contracting States:
DE FR IT

(71) Applicant: MITSUBISHI DENKI KABUSHIKI KAISHA
2-3, Marunouchi 2-chome Chiyoda-ku
Tokyo(JP)

(72) Inventor: Hioki, Takeshi, Mitsubishi Denki Mekatoronikusu
Software K.K., 1-14, Yadaminami 5-chome
Higashi-ku, Nagoya-shi, Aichi(JP)
Inventor: Iida, Kazumi, Mitsubishi Denki Mekatoronikusu
Software K.K., 1-14, Yadaminami 5-chome
Higashi-ku, Nagoya-shi, Aichi(JP)
Inventor: Niwa, Toshihiro, Mitsubishi Denki Mekatoronikusu
Software K.K., 1-14, Yadaminami 5-chome
Higashi-ku, Nagoya-shi, Aichi(JP)
Inventor: Kuchiki, Kiyoshi, Mitsubishi Denki Mekatoronikusu
Software K.K., 1-14, Yadaminami 5-chome
Higashi-ku, Nagoya-shi, Aichi(JP)
Inventor: Mizutani, Kazuo, Mitsubishi Denki Mekatoronikusu
Software K.K., 1-14, Yadaminami 5-chome
Higashi-ku, Nagoya-shi, Aichi(JP)

(74) Representative: Lehn, Werner, Dipl.-Ing. et al
Hoffmann, Eitle & Partner Patentanwälte
Arabellastrasse 4
W-8000 München 81(DE)

(54) Numerical control unit with compensation for offset error.

(57) A method and apparatus for providing compensation for offset error in a numerical control unit, particularly a lathe, on the basis of tool nose height. Machine commands for one-block movement of a tool are modified by stored tool offset information (9) to produce corrected one-block travel parameters. Command data is generated by interpolating the parameter data for a single block and adjusting the command data for tool movement on the basis of stored nose height information (11) for the tool. The adjustment to the command data may take place continuously or may be implemented per block.

*FIG. 1*

## BACKGROUND OF THE INVENTION

Field of the Invention

The present invention relates to a numerical control unit (hereinafter referred to as an "NC unit") and particularly to the correction of error caused by tool offset in a numerically controlled tool.

Description of the Prior Art

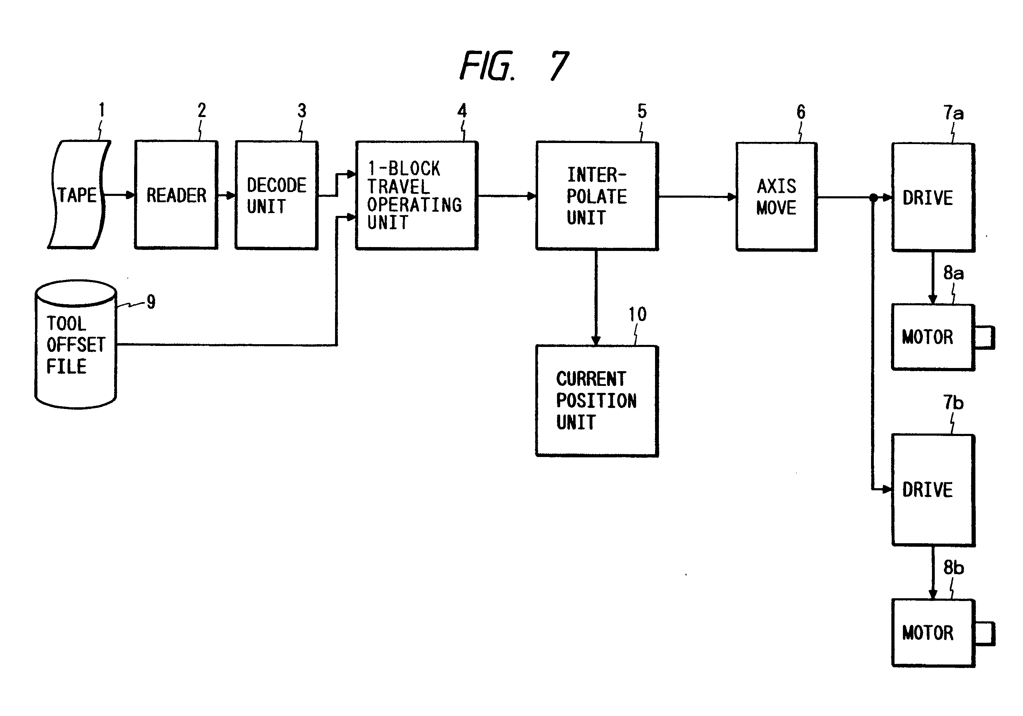

Fig. 7 is a block diagram illustrating the configuration of an NC unit known in the art, particularly a lathe. In Fig. 7, a paper tape 1 storing a machining program is input to a reader 2 for reading commands from a machining program stored on the paper tape 1. An instruction decoder unit 3 analyzes the read commands and provides an input to a one-block travel operating unit 4. A tool offset file 9, storing offset values (e.g. a nose radius offset value and tool nose position offset values comprising transverse tool length and axial tool length) for each tool, also provides an input to the one-block travel operating unit 4. Unit 4 calculates the tool movement for one block, defined by a start and an end point of tool movement per unit time, in accordance with the command analysis by instruction decoder unit 3 and the tool offset values stored in the tool offset file 9. The calculation process may be conducted for several blocks, each successive block defining a subsequent desired end point for the tool movement. The several blocks together will achieve the desired shape of a workpiece. An interpolation operating unit 5 computes by interpolation axial travel per unit time in accordance with the results calculated by the one-block travel operating unit 4. A current position store 10 determines and stores the absolute position of the tool center in accordance with the results calculated by the interpolation operating unit 5. An axial movement outputting circuit 6 receives the axial movement per unit time output from the interpolation operating unit 5, and generates an appropriate output to driving circuits 7a and 7b for driving motors 8a and 8b, respectively.

This functional configuration is quite conventional for a lathe-type NC unit.

In operation, machining instructions are entered in the form of a machining program from the paper tape 1. The contents of this machining program are read by the tape reader 2 and are decoded by the instruction decoder unit 3. In the one-block travel operating unit 4, movement for a block, i.e. end-point coordinates for a block, is computed in accordance with the machining program decoded by the instruction decoder unit 3. If tool offset is being used at this time, the block-by-block travel (end-point coordinates) is compensated for according to the tool offset values stored in the tool offset file 9. The compensated one-block travel calculated by the one-block travel operating unit 4 is converted into incremental axial-movement-per-unit-time values by the interpolation unit 5. The axial-movement-per-unit-time value is used to generate an output to the driving circuits 7a, 7b by the axial movement outputting circuit 6 for driving the motors 8a, 8b and advancing the tool toward the block end point position. In the current position store 10, the axial-movement-per-unit-time calculated by the interpolation operating unit 5 is integrated to calculate and store in a register the current position of the tool.

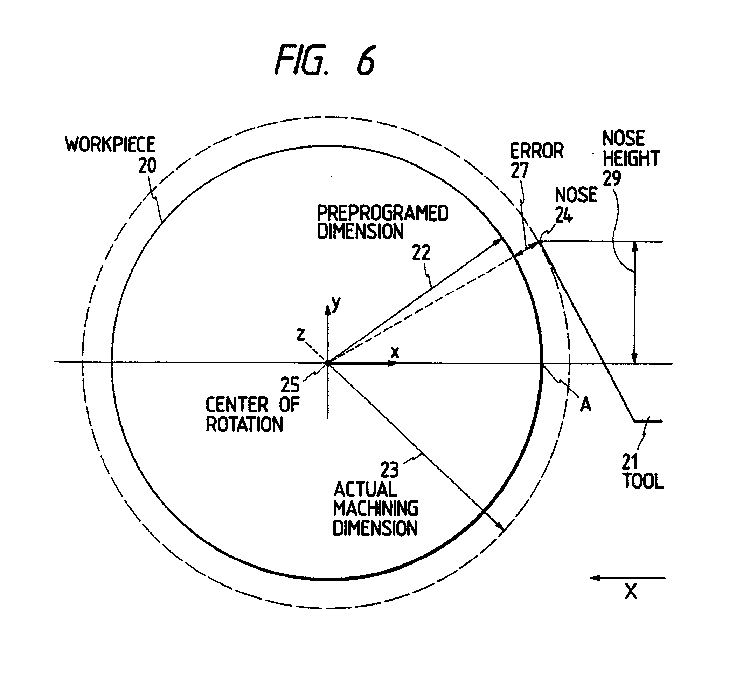

An example of cutting a workpiece by means of the above NC unit is provided in Fig. 6, which illustrates a section of a cylindrically-shaped workpiece 20, which rotates about center of rotation 25. Tool 21 moves only in the horizontal direction (i.e., right to left or left to right in the Figure) along the axis. The workpiece 20 is cut when a nose 24 of the tool 21 makes contact with the rotating workpiece 20. Ideally, at the time of contact the nose 24 is located at point A which is a workpiece radius away from the NC machining center axis of rotation 25 in the direction of tool movement X, and the NC unit will assume that point A is the place where contact is being made. In Figure 6, if the nose 24 is dislocated by a distance (nose height) 29 in a direction perpendicular (vertical) to the moving direction (horizontal) of the tool 21 and measured from a horizontal straight line passing through the center of rotation 25, an error 27 is produced between a preprogrammed dimension 22 commanded by the machining program and an actual machining dimension 23 of the workpiece 20 to be cut. This error occurs because the prior art NC unit does not compensate for the nose height 29. The amount of the error 27 depends on the nose height 29 and the preprogrammed dimension 22, and is represented by the following expression:

Error (27) =

$$\frac{\sqrt{(preprogrammed\ dimension\ (22))^2 + (nose\ height\ (29))^2}}{- (preprogrammed\ dimension\ (22))}$$

Therefore, the NC unit known in the art cannot provide the machining dimension specified by the machining program if the nose 24 is out of alignment with the center axis of rotation 25 of the workpiece.

As means for improving this accuracy, some units provide compensation in their machining program by including a nose height offset value in the tool offset values. However, when there is a change in the workpiece parameter, the error will be different, even between NC units or tools having the same nose height 29, as is clearly indicated by the aforementioned expression. Hence, the nose height offset value also must be changed in the machining program depending on the NC unit or tool employed and the workpiece diameter.

It is accordingly an object of the present invention to overcome the disadvantages in the prior art by providing an NC unit which automatically ensures accurate cutting.

It is another object of the present invention to provide an NC unit that provides offset compensation for a variety of different tools and workpieces.

It is a further object of the present invention to provide an NC unit that compensates for tool offset on a continuous basis, as the tool advances on the workpiece.

## SUMMARYOF THE INVENTION

An NC unit of a first embodiment of the present invention comprises: a tool nose height file for storing a tool nose height value, and an axial movement value offset unit for computing an axial movement offset value, corresponding to a current position, in accordance with tool nose height data corresponding to a tool commanded by a numerical-control machining program from the tool nose height file as well as current position data from a current position register specifying a current position on an axis orthogonal to the axis of the workpiece.

According to the first embodiment, the axial movement offset unit computes for each in a series of blocks the axial movement of a tool from its current position in accordance with the tool nose height data and the current position data.

An NC unit according to a second embodiment comprises: a tool nose height file for storing a tool nose height value, and an end-point offset unit for computing an axial movement offset value for each block in accordance with: (1) tool nose height data for the tool used in the numerical-control machining program, from the tool nose height file, as well as (2) end-point coordinate data computed by a one-block movement operating device.

According to the second embodiment, the end-point offsetting device computes an axial movement offset value corresponding to one block in accordance with the tool nose height data and end-point coordinate data.

## BRIEFDESCRIPTION OF THE DRAWINGS

Fig. 1 illustrates a configuration of one embodiment according to the present invention.
Fig. 2 is a sectional view of a workpiece having a cylindrical shape.
Fig. 3 is a flowchart illustrating axial movement offset processing in an embodiment according to the present invention.
Figs. 4A and 4B illustrate movement of a tool in accordance with first and second embodiments of the present invention.
Fig. 5 illustrates a configuration of a second embodiment according to the present invention.
Fig. 6 is a sectional view of a cylindrically-shaped workpiece cut by the NC unit known in the art.
Fig. 7 is a configuration diagram illustrating major components of the prior art NC unit.
In the above drawings, the same numerals in the different views identify identical parts.

## DESCRIPTIONOF THE PREFERRED EMBODIMENT

Embodiments of the present invention will now be described with reference to the drawings.

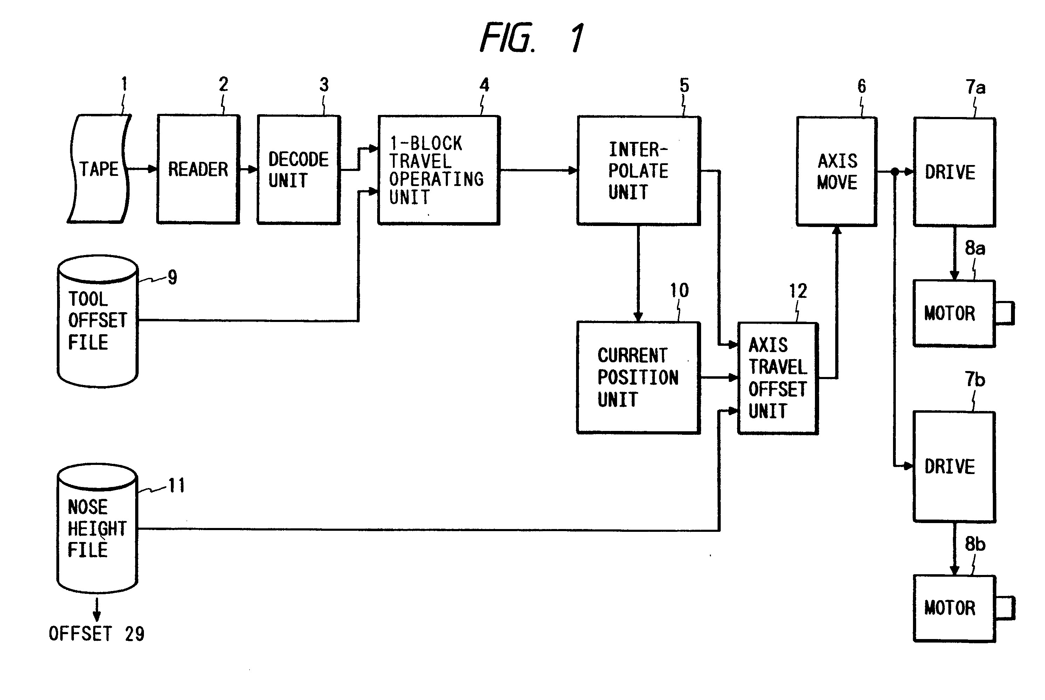

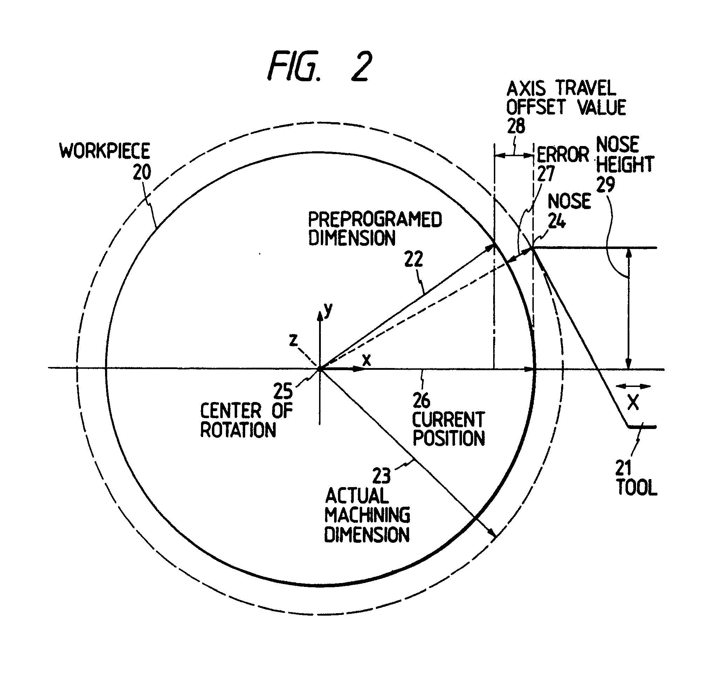

Fig. 1 is a block diagram of an NC unit, particularly a lathe, concerned with the present invention. Note that like reference characters designate like or corresponding parts in Fig. 1 and Fig. 7, and such parts will not be re-described here. Referring to Fig. 1, a nose height file 11 is used for storing the nose height value of each tool. An axial movement offset unit 12 is used for reading a current position from a register in current position store 10 and a nose height value from the nose height file 11 and computing an axial movement offset value 28 (see Fig. 2).

The value in the nose height file 11 is obtained by measuring the nose height of each tool (cutting tool) 21 that will be installed in the tool mount of the NC machine tool (NC lathe). Because the tool dimensions change with use, due to wear, the tool dimensions should be measured after each use and the prior values stored in the files 9 and 11 should be updated. The measured nose height value is entered into file 11 from a keyboard (not illustrated) in the same manner that the tool offset values are entered into the tool offset file 9 in the prior art.

The axial movement value offset unit 12 is illustrated as if it were a hardware circuit in Fig. 1 for better understanding. In actuality, however, it would be implemented in software, as would instruction decoding unit 3, one-block travel operating unit 4 and interpolation operating unit 5, and operate under control of a CPU (not shown).

The operation of the NC unit of the present invention will now be described. The operation performed in the unit, up to and including the interpolation unit 5, is the same as in the conventional NC unit. However, the axial movement-per-unit time (incremental movement value) computed by the interpolation unit 5 is output to axial movement outputting circuit 6 as modified via the axial movement offsetting unit 12. Specifically, the actual machining dimension is made to match a preprogrammed machining dimension by entering the current position data (X axis) from a register in current position store 10, and the nose height data (Y axis) for the particular tool in the NC unit taken from the nose height file 11, calculating an axial movement (X axis) offset value from the axial movement-per-unit time value from unit 5 and the nose height data from unit 11 and using this value to modify the axial movement-per-unit time value, as described in more detail below.

Fig. 2 illustrates the relationship among the current position, nose height value and axial movement offset value. The dimension 26 indicates the current position of the tool with respect to the workpiece center of rotation 25. The dimension 29 indicates the nose height stored in the nose height file 11 as a nose height value. On the basis of these two dimensions, the axial movement offset value 28 may be determined and is represented by:

$$\textbf{Axial movement offset value (28) = (current position (26))}$$

$$\textbf{\textit{-- } \sqrt{\textit{(current position (26))}^2 - \textit{(nose height (29))}^2}}$$

By bringing the nose 24 closer to the workpiece 20 by an amount corresponding to the axial movement offset value 28, the workpiece 20 can be cut precisely to the preprogrammed dimension (radius 22), rather than the actual dimension at radius 23 if no compensation is made.

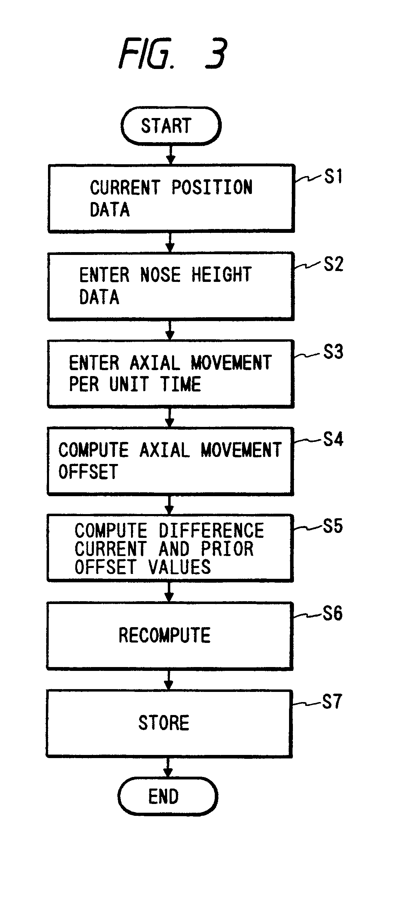

Fig. 3 is a flowchart illustrating the operational sequence of the axial movement offsetting unit 12. At steps S1, S2 and S3, the current position data, the nose height data and the axial movement-per-unit time (incremental axial movement value) are entered from the current position store 10, the nose height file 11 and the interpolation unit 5, respectively. At step S4, the axial movement offset value-per-unit time (incremental offset value) is then computed by the following expression using the above data:

$$\textbf{Axial movement offset value = current position}$$

$$\textbf{\textit{-- } \sqrt{\textit{(current position)}^2 - \textit{(nose height value)}^2}}$$

At step S5, the difference between the axial movement offset value-per-unit time found at step S4 and the preceding axial movement offset value per unit time is then computed by the following expression to obtain a change in the offset value:

Offset difference = (current axial movement offset value) - (preceding axial movement offset value)

Then, at step S6, the axial movement offset value-per-unit time obtained as above is combined with the above difference value as indicated by the following expression and is output to the axial movement outputting circuit 6:

Axial movement per unit time = (axial movement-per-unit time) - (offset difference)

Finally, at step S7, the new axial movement offset value is stored.

The processing at steps S5 to S7 is performed for the following reason. Namely, since the axial movement-per-unit time is compensated for in this embodiment, use of the axial movement offset value without any correction may produce an offset error when the tool 21 moves to the final coordinate position. In other words, since complete error compensation is required at the final coordinate position, the offset value needed for one block on a unit time basis is adjusted.

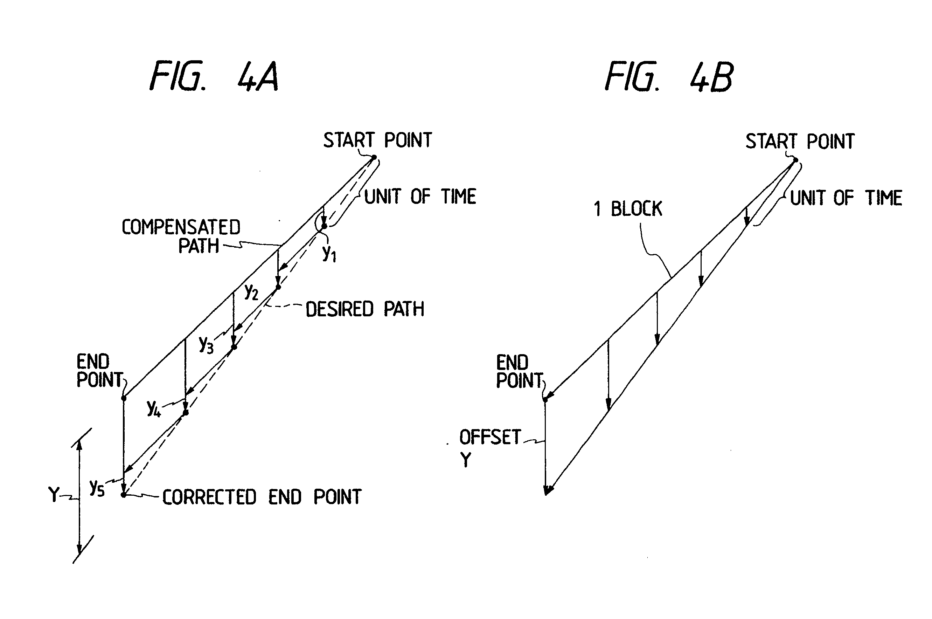

Figure 4A illustrates the compensation process used for a single-block in the first embodiment. As seen in the Figure, beginning at a start position and moving over a given unit of time, compensation using offset $y_1$ is obtained. Similar offsets $y_2$, $y_3$, $y_4$ and $y_5$ for each of several subsequent time unit are also obtained, the total offset Y for the block being the sum of the individual offsets.

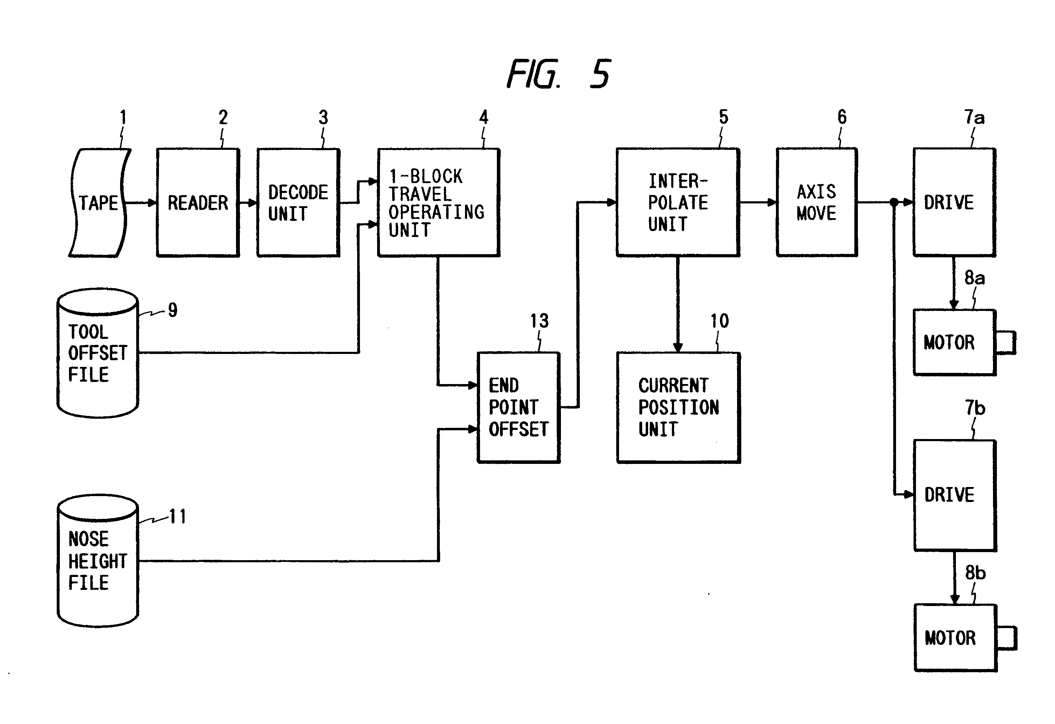

Figure 4B illustrates a one-time offset compensation process in which the offset is calculated only at the end point of tool travel in a block. Specifically, the axial movement offset unit 12 in the first embodiment is replaced with end-point offset unit 13, as shown in Fig. 5. In this case, corrected end-point coordinates calculated using outputs of the one-block travel operating device 4 and the nose height value from the nose height file 11, would be entered. Then, one-block travel compensated for the nose height would be calculated for the entire block of the machining operation. Finally, the calculated offset value would be entered into the interpolation operating unit 5.

It will be appreciated that the interpolation operating unit 5 employed in the prior art may be used because the data for one-block travel is already adjusted on the basis of the nose height by the end-point offsetting circuit 13 before being entered into the interpolation operating unit 5.

It will be apparent that the present invention, as described above, is particularly useful for a lathe-type NC unit having a nose height file and axial movement offsetting unit, where the axis of the workpiece is the axis of rotation. The present invention can provide precision cutting to preprogrammed dimensions by simply entering a nose height value if the position of the nose is out of alignment with the center of workpiece rotation.

While the present invention has been described in terms of several preferred embodiments, it is not limited thereto and its full scope is defined in the appended claims.

**Claims**

1.  A numerical control unit for reading a machining program and controlling movement of a tool in a direction orthogonal to a machining center axis of a workpiece comprising:

    a tool nose height file for storing nose height data for said tool;

    a current position means for generating current position data identifying the current position of said tool in an axial system orthogonal to said machining center axis of a workpiece; and

    axial movement offsetting means for computing an axial movement offset value corresponding to a current axial position in response to said respective tool nose height data and current position data from said current position means.

2.  A numerical control unit including instruction decoding means and one-block travel means for decoding a machining program by means of said instruction decoding means and computing for each block end-point coordinates for an axial movement command by means of said one-block travel means in accordance with the results decoded by said instruction decoding means, comprising:

    a tool nose height file for storing a tool nose height value corresponding to a tool commanded by said numerical-control machining program; and

    end-point offsetting means for computing an axial movement offset value for one block in accordance with tool nose height values from said tool nose height file and end-point coordinate data computed by said one-block travel means.

3.  A numerically controlled lathe operative to read a machining program and to control movement of a tool in an axial direction orthogonal to the axis of rotation of a workpiece, comprising:

a tool nose height file for storing a tool nose height value corresponding to the tool commanded by said machining program; and

axial movement offsetting means for computing an axial movement offset value corresponding to a current position in accordance with tool nose height data from said tool nose height offset file as well as current position data from a current position register, said current position data defining tool position in an axial system orthogonal to said axis of rotation.

4. A numerically controlled lathe including means for reading a machining program, instruction decoding means for decoding a machining program and one-block travel means for computing block-by-block end-point coordinates for axial movement in accordance with the results decoded by said instruction decoding means, comprising:

tool nose height storage means for storing tool nose height values; and

end-point offset means for computing an axial movement offset value corresponding to one block in accordance with tool nose height data corresponding to a tool commanded by said machining program from said tool nose height storage means as well as end-point coordinate data computed by said one-block travel means.

5. A method of controlling an NC machine operative to machine a workpiece rotatable about a machining center axis by advancing a tool, said tool having a nose offset from said axis in an axial direction orthogonal to said axis, in response to input command data, comprising:

measuring the nose height value for said tool, said nose height comprising the orthogonal distance between said nose and said axis;

storing said nose height value,

generating axial movement per unit time data in response to said input command data,

calculating an axial movement offset value in response to said nose height value,

generating offset axial movement control signals in response to said offset value; and

controlling the movement of said tool in response to said control signals.

6. The method of claim 5 wherein said calculating step is conducted per unit time on the basis of a current position measured in a direction orthogonal to said axis.

7. The method of claim 5 wherein said calculating step is conducted per block on the basis of end point coordinate data.

# FIG. 1

EP 0 451 795 A2

# FIG. 2

AXIS TRAVEL OFFSET VALUE 28

WORKPIECE 20

PREPROGRAMED DIMENSION 22

ERROR 27

NOSE HEIGHT 29

NOSE 24

y

z

x

25 CENTER OF ROTATION

26 CURRENT POSITION

23 ACTUAL MACHINING DIMENSION

X

21 TOOL

# FIG. 3

START

CURRENT POSITION DATA — S1

ENTER NOSE HEIGHT DATA — S2

ENTER AXIAL MOVEMENT PER UNIT TIME — S3

COMPUTE AXIAL MOVEMENT OFFSET — S4

COMPUTE DIFFERENCE CURRENT AND PRIOR OFFSET VALUES — S5

RECOMPUTE — S6

STORE — S7

END

FIG. 4A

FIG. 4B

EP 0 451 795 A2

FIG. 5

# FIG. 6

# FIG. 7

EP 0 451 795 A2